# EUROPÄISCHE PATENTSCHRIFT

(11) **EP 0 659 307 B1**
(45) Veröffentlichungstag und Bekanntmachung des Hinweises auf die Patenterteilung: **08.05.1996**
(21) Anmeldenummer: 93918771.2
(22) Anmeldetag: 09.09.1993
(51) Int. Cl.: H02K 3/50, H02K 3/40

(54) **HOCHSPANNUNGSWICKLUNG**
HIGH-VOLTAGE WINDING
ENROULEMENT HAUTE TENSION

(30) Priorität: 10.09.1992 AT 1808/92
(43) Veröffentlichungstag der Anmeldung: 28.06.1995
(73) Patentinhaber: ELIN ENERGIEVERSORGUNG GESELLSCHAFT m.b.H., A-1141 Wien (AT)
(72) Erfinder: MÜLLER, Franz, A-8071 Grambach (AT); MUSSBACHER, Günther, A-8062 Kumberg (AT)
(74) Vertreter: Krause, Peter
(86) Internationale Anmeldenummer: AT9300141
(87) Internationale Veröffentlichungsnummer: WO9406194

(56) Entgegenhaltungen:
- DE-A- 2 947 893
- US-A- 2 436 306
- US-A- 3 949 257
- US-A- 4 196 464

## Beschreibung

Die Erfindung betrifft eine Hochspannungswicklung einer rotierenden elektrischen Maschine, bei der die konstruktive Abstützung des Wickelkopfes mit mindestens einem Glasfaserschlauch fortlaufend ausgeführt ist, und im Bereich des Wickelkopfes jede Wicklungsausladung mit mindestens einem Glasfaserschlauch fortlaufend umbandelt ist, wobei der Glasfaserschlauch mit einer Glas- oder Polyestergewebestruktur umgeben und insbesondere mit einem bei Raumtemperatur vernetzenden Harz gefüllt ist.

Die US-A-3 949 257, DE-A-2 947 893 und US-A-2 436 306 beischreiben derartige Hochspannungswicklungen.

Wicklungen elektrischer Maschinen sind auf Grund ihrer Funktionsweise elektromagnetischen und thermomechanischen Kräften ausgesetzt. Bei instationären Vorgängen in der Maschine oder bei Fehlbedienungen bzw. Anlagengebrechen - Kurzschlüsse, Fehlsynchronisation - können die auftretenden Kräfte ein Vielfaches gegenüber jenen im Nennbetrieb betragen. Neben einer sicheren Befestigung im Nutbereich ist für eine hohe Zuverlässigkeit und Betriebssicherheit des Maschinensatzes auch eine sichere Befestigung der Wicklungsausladung wesentlich.

Die Wicklungsbefestigung erfolgt bei der eingangs zitierten Hochspannungswicklung mit Hilfe von Glasfaserschläuchen, die mit einer Glas- oder Polyestergewebestruktur umgeben sind. Die Wicklungsausladungen werden vorerst mit diesen Schläuchen umbandelt, wodurch gleichzeitig eine Distanzierung zueinander erreicht wird. Um eine ausreichende mechanische Festigkeit zu erhalten, werden anschließend die Schläuche mit einem bei Raumtemperatur vernetzendem Harz gefüllt.

Für die Wickelkopfabstützung haben sich verschiedene Befestigungsmethoden bewährt, die in ihrer Funktion im allgemeinen darauf beruhen, daß eine tangentiale Abstützung benachbarter Wicklungsstäbe, unter Einhaltung eines von der Maschinenspannung abhängigen Distanzabstandes, zueinander erfolgt. Wenn es die zu erwartenden mechanischen Beanspruchungen erfordern, wird eine zusätzliche radiale Abstützung des von der Wicklungsausladung gebildeten kegelförmigen Gewölbe durch Art von Konsolen und Versteifungsringen vorgesehen.

Dabei ist unvermeidlich, daß vor allem bei der tangentialen Befestigung, abhängig von der konstruktiven Ausführung der Abstützelemente, wie Distanzstücke, Schläuche oder Bandagen, fertigungstechnisch bedingt mehr oder weniger große Zwickel und Spalte entstehen, die an Phasentrennstellen zu Teilentladungen führen können. Zusätzliche Verschmutzung des Wickelkopfes im Laufe der Betriebszeit durch Bürstenabrieb oder Öldunst kann an diesen Stellen zu stark erhöhten Entladungenpegel und in der Folge zu einer oberflächigen Zerstörung der Isolierung führen.

Aufgabe der Erfindung ist es, die oben aufgezeigten Nachteile zu vermeiden und eine teilladungsarme und mechanisch sichere Befestigung zu erreichen, die darüber hinaus noch eine rationelle Fertigung zuläßt.

Die erfindungsgemäße Hochspannungswicklung ist dadurch gekennzeichnet, daß die äußere Oberfläche des Glasfaserschlauches mit einer halbleitenden Polymereschicht versehen ist, die ein Injizieren des Harzes in den Glasfaserschlauch nach dem Umwickeln der nebeneinanderliegen Ober - bzw. Unterstäbe erlaubt.

Mit der Erfindung werden zwei Vorteile erreicht. Für das Injizieren vom Harz in den Glasgewebeschlauch, das vorzugsweise mit einer Nadel und Dosieranlage erfolgt, hat die elastisch eingestellte Polymereschicht die Aufgabe einer Dichtung. Sie umschließt die Nadel beim Anstechen des Glasschlauches und verhindert dadurch weitgehend ein Austreten vom Harzes an der Einstichsöffnung. Der zweite Vorteil ist der einer Potentialsteuerung. Zur Vermeidung von Teilentladungen in den durch den Glasfaserschlauch und der Isolierung des Stabes oder Spule gebildete Zwickeln, ist die Polymereschicht des Glasfaserschlauches durch geeignete Zusätze halbleitend eingestellt. Damit wird die gesamte Potentialverteilung zwischen den beiden Leitern und Spulen- oder Stabisolierungen zugunsten des Glasschlauches verschoben und damit eine Ionisation der Zwickeln vermieden.

Nach einem weiteren Merkmal der Erfindung ist die Polymereschicht eine Silikonschicht und weist als Bestandteil Siliziumkarbid auf. Bei Versuchen haben derartige Materialien ausgezeichnete Ergebnisse gezeigt, wobei die Wirtschaftlichkeit noch hervorzuheben ist.

Gemäß einer besonderen Ausgestaltung der Erfindung ist die halbleitende Polymereschicht am Umfang des Glasfaserschlauches durch nicht leitende Abschnitte unterteilt. Für das Erreichen eines niedrigen Teilentladungspegels hat sich diese Ausgestaltung als günstig erwiesen.

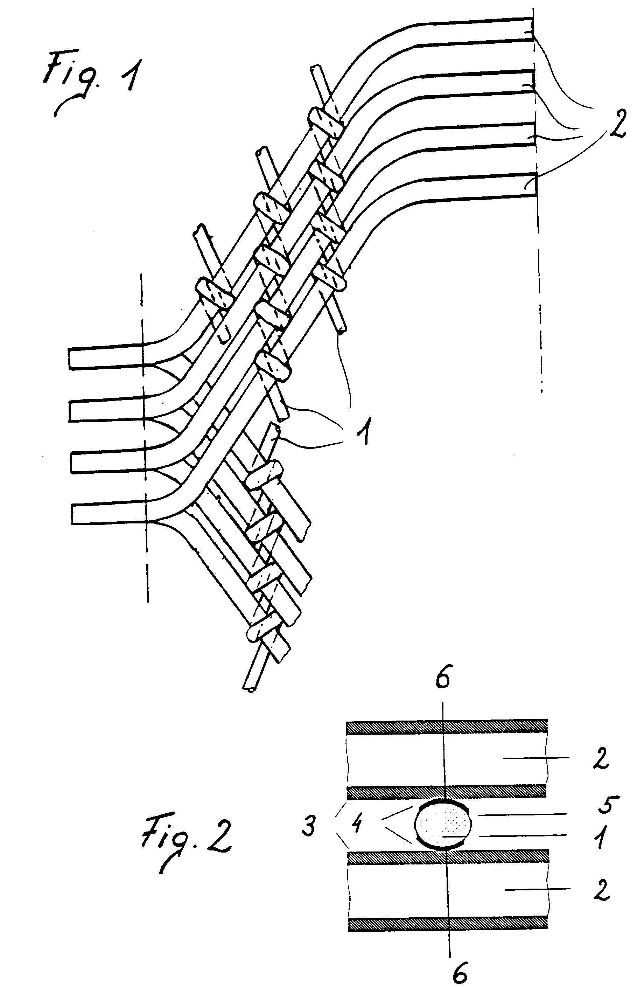

Die Erfindung wird an Hand eines in der Zeichnung dargestellten Ausführungsbeispieles näher erläutert. Fig. 1 zeigt schematisch den Wickelkopf und Fig. 2 den Glasfaserschlauch zwischen zwei Spulen.

Gemäß der Fig. 1 erfolgt die Wicklungsbefestigung im Bereich des Wickelkopfes mit einem Glasfaserschlauch 1, wobei jeder Wicklungsstab 2 umbandelt wird. Der Glasfaserschlauch ist mit einer Glas- oder Polyestergewebestruktur umgeben. Um eine gute mechanische Festigkeit zu erhalten werden die Glasfaserschläuche 1 mit einem Harz gefüllt. Die Anzahl der Distanzierungen der Spulenausladungen mit Glasfaserschläuchen 1 ergibt sich aus dem maximal zulässigen Teilungsabstand. Es ist jedoch mindestens eine Distanzierung in der Ober- und Unterschicht des Wickelkopfes vorgesehen. Natürlich wird der Durchmesser des Glasfaserschlauches 1 entsprechend den Abständen der Stabschenkel gewählt.

Gemäß der Fig. 2 ist zur Vermeidung von Teilentladungen in den durch den Glasfaserschlauch 1 und der Isolierung 3 des Stabes oder der Spule 2 gebildeten Zwickeln 4, der Glasfaserschlauch 1 mit einer halbleitenden Polymereschicht 6 versehen.

Diese Polymereschicht 6 kann den Glasfaserschlauch - wie nicht dargestellt - auch an seiner Oberfläche ganz umgeben.

Vorteilhaft ist es aber, die halbleitende Polymereschicht 6 am Umfang durch nicht leitende Abschnitte 5 zu unterteilen. Damit wird die ganze Potentialverteilung zwischen den beiden Kupferleitern 2 bzw. der Leiterisolierung 3 zugunsten des Glasfaserschlauches 1 verschoben und damit eine Ionisation der Zwickel 4 vermieden.

Die halbleitende Polymereschicht 6 auf der Außenoberfläche des Glasfaserschlauches weist beispielsweise Siliziumkarbid als Zusatz auf und ist eine elastische Silikonschicht.

## Patentansprüche

1. Hochspannungswicklung einer rotierenden elektrischen Maschine, bei der die konstruktive Abstützung des Wickelkopfes mit mindestens einem Glasfaserschlauch (1) fortlaufend ausgeführt ist, im Bereich des Wickelkopfes jede Wicklungsausladung mit mindestens einem Glasfaserschlauch (1) fortlaufend umbandelt ist, wobei der Glasfaserschlauch (1) mit einer Glas- oder Polyestergewebestruktur umgeben und insbesondere mit einem bei Raumtemperatur vernetzenden Harz gefüllt ist, dadurch gekennzeichnet, daß die äußere Oberfläche des Glasfaserschlauches (1) mit einer halbleitenden Polymereschicht (6) versehen ist, die ein Injizieren des Harzes in den Glasfaserschlauch (1) nach dem Umwickeln der nebeneinanderliegen Ober- bzw. Unterstäbe (2) erlaubt.

2. Hochspannungswicklung nach Anspruch 1, dadurch gekennzeichnet, daß die Polymereschicht (6) eine Silikonschicht ist und als Bestandteil Siliziumkarbid aufweist.

3. Hochspannungswicklung nach Anspruch 1 oder 2, dadurch gekennzeichnet, daß die halbleitende Polymereschicht (6) am Umfang des Glasfaserschlauches (1) durch nicht leitende Abschnitte (5) unterteilt ist.

## Claims

1. High voltage winding of an electrical rotating machine, wherein the construction of the support of the winding head is realized continuous with at least a pipe (1) in glass fibers, is surrounded in continuous by mean of at least a glass fibers pipe (1), the glass fibers pipe (1) being surrounded by a structure woven in glass or in polyester and especially filled a resin having a wetting power to the ambient temperature, characterized in that the external surface of the glass fibers pipe (1) is provided of a layer of semi-conductive polymer (6) that allows an injection of the resin in the glass fibers pipe (1) of barrs upper or lower bars (2) placed one beside the other after winding.

2. High voltage winding according to the claim 1, characterized in that the polymer layer (6) is a silicone layaer and contains silicon carbide as constituent.

3. High voltage winding according to the claim 1 or 2, characterized in that the semi-conductive polymer layer (6) is subdivided to the periphery of the glass fibers pipe (1) by means of non-conductive sections (5).

## Revendications

1. Bobinage haute tension d'une machine électrique tournante, pour lequel l'appui de construction de l'appui de la tête de bobinage est réalisé de façon continue avec au moins un tuyau en fibres de verre (1), est entouré en continu d'au moins un tuyau en fibres de verre (1), le tuyau en fibres de verre (1) étant entouré d'une structure tissée en verre ou en polyester et en particulier rempli d'une résine ayant un pouvoir mouillant à la température ambiante, caractérisée en ce que la surface extérieure du tuyau en fibres de verre (1) est pourvue d'une couche polymère (6) semi-conductrice qui permet une injection de la résine dans le tuyau en fibres de verre (1) après enroulement des barreaux supérieur ou inférieur (2) placés l'un à côté de l'autre.

2. Bobine à jeu de tension selon la revendication 1, caractérisée en ce que la couche polymère (6) est une couche de silicone et présente du carbure de silicium comme constituant.

3. Bobinage haute tension selon la revendication 1 ou 2, caractérisé en ce que la couche polymère (6) semi-conductrice est subdivisée à la périphérie du tuyau en fibres de verre (1) au moyen de sections (5) non-conductrices.
